(19) Europäisches Patentamt

European Patent Office

Office européen des brevets

(11) EP 1 566 667 A2

(12) EUROPEAN PATENT APPLICATION

(43) Date of publication:
24.08.2005 Bulletin 2005/34

(51) Int Cl.$^7$: G02B 5/28

(21) Application number: 05009609.8

(22) Date of filing: 28.01.1998

(84) Designated Contracting States:
DE GB NL

(30) Priority: 28.01.1998 JP 1562698

(62) Document number(s) of the earlier application(s) in accordance with Art. 76 EPC:
99904378.9 / 1 060 416

(71) Applicant: MINNESOTA MINING AND MANUFACTURING COMPANY
Minnesota 55133-3427 (US)

(72) Inventor: The designation of the inventor has not yet been filed

(74) Representative: Vossius & Partner
Siebertstrasse 4
81675 München (DE)

Remarks:
This application was filed on 02 - 05 - 2005 as a divisional application to the application mentioned under INID code 62.

(54) An optical filter

(57) The present invention is directed to an optical filter, having a dielectric reflective layer capable of reflecting at least 70% of radiation in an undesired wavelength region while transmitting a predetermined proportion of light in a desired wavelength region, wherein the dielectric reflective layer comprises a set of first polymer layers comprising a first polymer in combination with a set of second polymer layers comprising a second polymer having a refractive index different from the first polymer, wherein the first polymer layers and the second polymer layers are alternately stacked; and an EMI shielding layer disposed on the dielectric reflective layer.

Fig. 6

EP 1 566 667 A2

## Description

### *Technical Field of the Invention*

The present invention relates to an optical filter and particularly to an infrared interference filter which is pressed between a light emitting device, such as a plasma display device, and an infrared sensitive detector such as those found on remote-controlled audio/video components, to prevent undesired infrared emissions from entering the infrared sensor and interfering with desired infrared control signals produced by a remote control device.

### *Background of the Invention*

Consumer audio/video (A/V) systems are often controlled with a remote control. Remote controls usually supply a simple pulsed stream of data with an infrared light emitting diode, which is sensed by an infrared sensitive detector on the A/V device. Since there are a limited number of commands, the IR data stream is usually low frequency. Also, since the location of the remote is by the nature of the application not predetermined, the IR sensor on the A/V device must have a wide range of detection angles. Recent technologies have been introduced that may interfere with the remote control on an A/V system. These include light sources with high frequency noise, including dimmable compact fluorescent bulbs and plasma displays, and newer devices that use a high frequency data stream. Examples of the latter include computer peripherals, including data relays, digital camera/printer linkages, and local area networks. The infrared emissions of these devices are high frequency, and can be demodulated by the low speed detector on the A/V system, creating apparently random commands. It is desirable to filter either the emitted signal of the high frequency device or the input to the infrared sensitive detector on the A/V device so that unwanted emission does not interfere with control or operation of the A/V device

Various optical filters arc known which are intended to selectively transmit electromagnetic radiation in a desired wavelength region and to absorb or reflect electromagnetic radiation in a wavelength band which is undesirable. Such optical filters are often disposed on the front surface side of an image plane of a display device to cut off light in an unnecessary wavelength band without sacrificing the transmission of the visible light. Example displays are those which utilize electroluminescence of a luminescent material or excitation emission of a phosphor by electron beam irradiation to visualize an image on an image plane. Due to the image visualization mechanism of such display devices, not only the desired visible light but also light unnecessary for improving the image quality, for example, in ultraviolet and infrared regions, or light in a region of wavelengths shorter than the ultraviolet region, is emitted.

The light in unnecessary wavelength regions in some cases adversely affects the human body and equipment other than the display device and hence it is preferable to filter out as much as possible.

Japanese Unexamined Patent Publication (Kokai) No. 8-231245 discloses an optical filter (an ultraviolet and infrared absorbing glass) comprising a glass substrate (a transparent support) and a filter layer, covering the surface of the substrate, constituted by a silicone coating containing an ultraviolet absorber and an infrared absorber. Phthalocyanine compounds, polymethylene compounds and other compounds are disclosed as specific examples of the infrared absorber. The light absorbent filter layer used in these conventional optical filters also tends to absorb desirable light in the visible region (usually wavelengths ranging from 400 to 800 nm). Although the amount of visible light absorbed is small, it is often inconvenient. When the optical filter is disposed on the front surface side of an image plane of the display device, attempts to decrease the amount of light in the unnecessary wavelength region result in more absorption of visual light, thus leading to reduced visible light transmittance and deteriorated image quality.

Japanese Unexamined Patent Publication (Kokai) No. 9-22657 discloses an optical filter comprising a filter layer constituted by a resin layer having on its surface a hologram mirror. In the filter layer of the optical filter, utilizing wavelength-selective reflectivity of the hologram mirror develops the optical filter effect. Unlike the light absorbent filter layer of conventional optical filters, the hologram mirror type optical filter uses neither a dye nor a pigment. In forming the hologram, however, a photosensitizer is added to the resin layer. This photosensitizer remains in the optical filter after the formation of the hologram and is likely to absorb also light in the vision region.

### *Summary of the Invention*

Many A/V remote controls use a light emitting diode with emission centered at about 940 nm. Interfering sources often emit light at shorter wavelengths, typically less than 900 nm., so in principle, the interfering radiation can be rejected either by covering the emission source with a filter that transmits only those wavelengths greater than about 940 nm. or by covering the detector element with a filter that transmits light only in the wavelength region of interest as defined by the emission of the remote control device and reflects light in interfering wavelength regions. In practice, this is difficult to achieve through standard filters. Absorbing filters have broad transitions from absorption to transmission, preventing high discrimination ratios. Dichroic filters can have a rapid transition from reflection to transmission at a fixed angle and can have very high discrimination ratios, but dichroic filters shift in reflection wavelengths with a change in angle, and will ordinarily will have a narrow use angle. For some applications a narrow use angle is not acceptable. Also, achieving a rapid spectral transition from reflection to transmission requires a dichroic filter with a relatively large number of layers, and this is expensive to produce.

In one embodiment, the present invention is an optical filter including a dielectric reflective layer capable of reflecting a predetermined proportion of light in a specific wavelength region while transmitting a predetermined proportion of light in the visible region. The dielectric reflective layer includes a first set of dielectric reflective layer units, constituted by a plurality of layers each formed of a first polymer, in combination with a second set of dielectric reflective layer units constituted by a plurality of layers each formed of a second polymer having a refractive index different from the first polymer, the first and second sets of dielectric reflective layer units being combined by alternately stacking the first polymer layers and second polymer layers, the dielectric reflective layer having a reflectance of not less than 70% of the light to be reflected and a transmittance of not less than 60% of light in the three primary color regions of the visible spectrum, including a blue region (wavelength; 430-490 nm), a green region (wavelength; 515575 nm), and a red region (wavelength: 580-640 nm).

In an alternative embodiment, if filtering the emission source is not practical, the optical filter of the present invention may be used to filter the input signal to the infrared detector on the A/V device so that unwanted high frequency emissions do not interfere with the low frequency emissions from the remote control device. The optical filter of the present invention may be curved to provide a wide viewing angle in one plane, and a limited viewing angle in the orthogonal plane, or may be used in combination with a diffuser to provide a wide viewing angle. The filters used in the present invention may vary widely depending on the intended application, but suitable infrared filters for use with the present invention are described in U.S. Serial No. 08/402,041 and U.S. Serial No. 09/005,727.

### Brief Description of the Drawings

Fig. 1 is a schematic cross-sectional view illustrating the wavelength selective reflection principle of a dielectric reflective layer included in the optical filter according to the present invention.
Fig. 2 is a graph showing a transmission spectrum of a dielectric reflective film used in an working example of the present invention.
Fig. 3 is a graph showing an emission spectrum of an image plane of the plasma display device in the working example.
Fig. 4 is a graph showing all emission spectrum of a signal from a remocon used in the working example.
Fig. 5 is a graph showing a variation of the reflectance depending upon the wavelength of the optical filters produced in Examples 1 and 2.
Fig. 6 is a diagram on one embodiment of the invention showing a diffuser in combination with an IR optical filter at the input to an infrared sensor.
Fig. 7 is a diagram of an alternate embodiment of the invention showing a curved IR filter to provide a side viewing angle in one viewing plane.

### Detailed Description of the Invention

Remote control systems (remocons) for audio/video (A/V) systems includes a transmitting unit and a receiving unit. Since the location of the remote is by the nature of the application not predetermined, IR sensors on the A/V device have a wide range of detection angles. Typical transmitting units transmit an operating signal typically in the IR region of the wavelength spectrum (from about 800 nm to about 1000 nm.) Often the transmitting units supply a simple low frequency pulsed stream of data from an infrared light emitting diode, with emission typically centered around about 940 nm. The operating signal is then detected by an infrared receiving unit on the A/V device. If equipment other than the transmitting unit emits IR light having substantially the same wavelength at the that of the transmitting device, which is then received by the receiving unit, the receiving unit mistakes the IR light for an operating signal from the transmitting unit. This results in improper working of the A/V device. Recent technologies have been introduced that may interfere with the remote control on an A/V system. These include light sources with high frequency noise, including dimmable compact fluorescent bulbs and plasma display devices, and newer devices that use a high frequency data stream. Examples of the latter include computer peripherals, including data relays, digital camera/printer linkages, and local area networks. The infrared emissions of these devices are high frequency, and can be demodulated by the low speed detector on the A/V system, creating apparently random commands. In the present invention either the emitted signal of the high frequency device or the input to the infrared sensitive detector on the A/V device is filtered so that unwanted emission does not interfere with control or operation of the A/V device.

The optical filter used in the present invention can effectively prevent interference with the remote control operation that is caused by unwanted IR emissions from sources other than the remocon transmitter. For optimum performance, it is desirable to reflect at least 70% of the light in the predetermined wavelength region in which the remocon operates, preferably greater than 80% and more preferably greater than 90% of the light in the predetermined wavelength region, in order to prevent improper functioning of the remocon unit.

Dielectric reflection layer

The dielectric reflective layer used as the filter layer in the optical filter of the present invention reflects a predetermined proportion of light (electromagnetic radiation) in a specific wavelength region while transmitting a predetermined proportion of light in another predetermined light region. In the present invention, the "dielectric reflective layer" is preferably made of a plurality of light-permeable dielectric layers intimately applied to one another. The relationship between the thickness of each layer and the refractive index is determined to provide a wavelength selecting property (a property such that light in a certain wavelength region is transmitted while reflecting the light in another wavelength region). In a preferred embodiment, the wavelength selecting property utilizes a reflection principle wherein the product of the thickness by the refractive index for the dielectric layer sandwiched between two materials is one-fourth the wavelength of incident light within the layer and the refractive index of the layer is higher or lower than that of both the materials, permitting two phases of reflected light at two interfaces of both materials and the layer to be coincident with each other to cause mutual intensification.

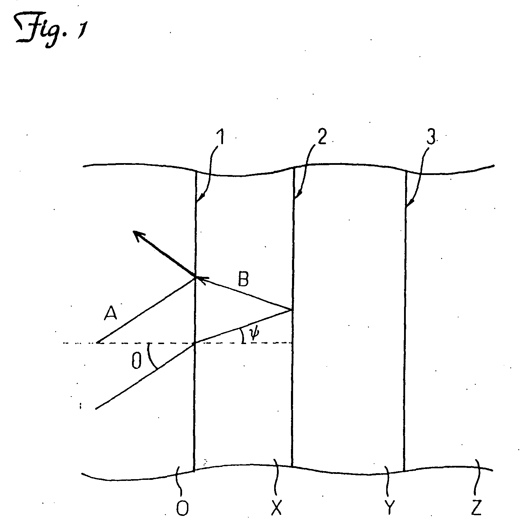

The dielectric reflective layer, for example, comprises a first set of dielectric reflective layer units, constituted by a plurality of layers each formed of a first polymer and a second set of dielectric reflective layer units constituted by a plurality of layers each formed of a second polymer having a refractive index different from the first polymer and is formed by alternately stacking the first and second polymer layers. In a preferred embodiment, at least one of the first and second sets of dielectric reflective layer units includes a quarter wavelength layer with the product of the thickness (d in nm) by the refractive index (n) of the polymer, i.e., n x d, being one-fourth the wavelength of light to be reflected, and light at wavelengths not corresponding to the quarter-wavelength (product (n x d)) can be transmitted. The wavelength selective reflection principle utilized in the dielectric reflective layer will be easily understood by the following description with reference to Fig. 1.

Fig. 1 is a schematic, partially enlarged cross-sectional view of a dielectric reflective layer in the optical filter of the present invention. In this embodiment, dielectric reflective layer forming polymer layers 0, X, Y, and Z formed of the first or second polymer are shown in the drawing. That is, the dielectric reflective layer is a laminate of these layers and other optional polymer layers (not shown). As shown in the drawing, when light enters the polymer layer 0 and advances toward the interface I of the polymer layer 0 and the adjacent polymer layer X, the incident light is divided into two parts, light A reflected from the interface 1 and light B which enters the polymer layer X and is reflected from the interface 2. In this case, the optical path difference between the light A and the light B may be expressed by $2ndcos\Psi$ (where-

in d represents the thickness of the polymer layer X and n represents the refractive index of the polymer layer X). When this optical path difference is equal to one-half ($\lambda/2$) the wavelength of the incident light, the intensity of the reflected light is maximized. In this case, however, the refractive index of the polymer layer X is higher or lower than that of the adjacent polymer layers 0 and Y, and, in the embodiment shown in the drawing, the refractive index of the polymer layer X is higher than that of the polymer layer 0. In the polymer layer 0, when light enters along a normal to the interface 1 (a dotted line in the drawing) (that is, $\Psi = 0°$, $\theta = 0°$) , the optical path difference is equal to 2nd. In this case, a requirement for most intensifying the reflected light is:

$$2nd = \lambda/2, \text{ that is, } nd = \lambda/4.$$

That is, light at a wavelength which is four times the product (nd) of the thickness by the refractive index for the polymer layer X is reflected at the highest intensity by the dielectric reflective layer shown in the drawing. This is the so-called "quarter-wavelength principle." Similarly, if light is reflected from the interfaces 2 and 3, specific wavelengths, depending upon the thickness and refractive index for the polymer Y, are strongly reflected. Specifically, the dielectric reflective layer comprising a plurality of polymer layers with different thicknesses stacked on top of one another to satisfy the required relationship between the thickness and the refractive index reflects light in specific wavelength regions corresponding to the thickness and the refractive index for each polymer layer while effectively transmitting light in the other wavelength regions.

In general, since one polymer layer effectively acts on a waveband of about 10 to several tens of nm, a dielectric reflective layer comprising a limited number of layers can effectively function as a desired wavelength selective reflector. Therefore, for example, at least 20 polymer layers suffice for effective reflection of light in a wavelength spectrum of from 800 to 1,000 nm. In general, however, the larger the number of layers with different thicknesses, the better the reflectance. Although each of the layers is permeable to light, it absorbs a small amount of light. Therefore, use of an excessively large number of layers often leads to lowered light transmittance and reflectance. For this reason, the number of polymer layers (dielectric layers) stacked in the dielectric reflective layer used in the present invention is preferably in the range of from 50 to 2,000.

On the other hand, when light enters at an angle to the normal to the interface I (that is, $\psi > 0°$, $\theta > 0°$), the optical path difference is smaller than 2nd, that is, $2ndcos\psi$. Therefore, a requirement for maximizing the reflected light is $ndcos\psi = \lambda/4$. That is, incident light at a wavelength which is smaller than four times the product (nd) of the thickness by the refractive index for the polymer layer X (that is, a wavelength equal to 4ndcosψ) is reflected at the highest intensity by the dielectric reflective layer. The dielectric reflective layer may comprise a layer in which the product (nd) of the thickness is m/4 of the reflected light wherein m is an odd number of 3 or more.

The above dielectric reflective layer may be formed, for example, from a dielectric reflective film. The dielectric reflective film may be formed by conventional methods, such as (a) a method wherein a plurality of dielectric layers are coated on a transparent polymer film and (b) a method wherein a dielectric of a polymer material is provided and coextruded to form a multi-layer film. Methods for producing such a dielectric reflective film are disclosed in, for example, U.S. Patent Application Nos. 08/402,041, 09/006,288, and 09/006,455.

Preferred dielectries usable for constituting the dielectric reflective layer include light-permeable materials having a refractive index of not less than 1.1, for example, polymers, such as polyesters (for example, polyethylene naphthalate, polyethylene terephthalate, ethylene naphthalate/ethylene terephthlate copolyester), acrylic polymers (for example, polymethyl methacrylate and a copolymer of methyl methacrylate with other (meth)acrylate), polystyrene polymers (for example, polystyrene, a copolymer of styrene with butadiene, and a copolymer of styrene with acrylonitrile), fluoropolymers (for example, polyvinylidene fluoride and an ethylene fluoride/propylene fluoride copolymer), polyethylene, polypropylene, ethylene/acrylic acid copolymer, ethylencvinyl acetate copolymer, polyvinylidene chloride, polycarbonate, polyurethane, and epoxy resin. Other suitable materials are described in U.S. Patent Application Nos. 09/006,601 and 08/402,041.

Preferably, the dielectric reflective film is molded as a multi-layer polymer film by a coextrussion process. This provides good moldability and the optical filter of the present invention can be easily produced. The above dielectric reflective film may be formed, for example, by alternately stacking the first layer containing at least one dielectric of the above type and the second layer containing at least one dielectric of the above type. Substantially all the layers have a thickness of less than I μm, and, among them, a plurality of layers have different thicknesses so as to develop the above wavelength selectivity. The refractive index of each layer is usually not less than 1.1, preferably in the range of from 1.2 to 2.8. The difference between the refractive index n1 of the first layer and the refractive index n2 of the second layer, $\Delta n$ (=|n 1 - n2|) is usually in the range of from 0.05 to 1.5, preferably in the range of from 0.1 to 1.0. When each of the layers contains a polymer, the polymer layers each have preferably been biaxially stretched to effectively improve the wavelength selective reflection (reflectance of light at a specific wavelength).

In addition to the layers of two dielectrics, at least one layer of other dielectric(s) may be provided to form the stack. Additives, such as ultraviolet absorbers, antioxidants, anti-molds, rust preventives, moisture absorbents, colorants, phosphorescent materials, and surfactants, may be incorporated into the dielectric reflective layer so far as they are not detrimental to the effect of the present invention. Further, light-permeable protective film and adhesive layer may be formed on either the front or back surface or both surfaces of the dielectric reflective film so far as they are not detrimental to the effect of the present invention.

Emission source filter

Unwanted emission from a source such as a plasma display device or a dimmable compact fluorescent bulb can be prevented from reaching the infrared sensor of an A/V device by covering the emission source with an optical filter which reflects a predetermined proportion of light in a specific wavelength region while transmitting a predetermined proportion of light in the visible region. The optical filter preferably contains a dielectric reflective layer having a first set of dielectric reflective layer units, constituted by a plurality of layers each formed of a first polymer, in combination with a second set of dielectric reflective layer units constituted by a plurality of layers each formed of a second polymer having a refractive index different from the first polymer, the first and second sets of dielectric reflective layer units being combined by alternately stacking the first polymer layers and second polymer layers. In a preferred construction, at least one of the first and second sets of dielectric reflective layer units includes a quarter-wavelength layer with the product of the thickness (d in nm) by the refractive index (n) of the polymer, i.e., n x d, being one-fourth the wavelength of light to be reflected. For applications such as filtering the output of a plasma display device, it is preferred that the dielectric reflective layer reflects at least 70% of the light to be reflected and transmits at least 60% of light in three primary color regions of the visible spectrum, including a blue region (wavelength; 430-490 nm), a green region (wavelength; 515-575 nm), and a red region (wavelength; 580-640 nm).

In the optical filter of the present invention, the product (n x d) in the quarter-wavelength layer is preferably in the range of from 200 to 250 nm and the light reflectance in a wavelength region from 800 to 1,000 nm is preferably not less than 70%. Further, in the optical filter of the present invention, it is preferable that the optical filter further comprises a scratch resistant or anti-reflection resin layer disposed to face at least one surface of the dielectric reflective layer. The resin preferably contains a fluorine polymer. For example, when such a resin layer is located on the outermost layer of the optical filter, it functions as a stain-proofing layer to effectively protect the surface of the filter from scratches or stains such as human fingerprints which adhere to the surface of the filter and make the image plane unclear. When the product of the thickness (d in nm) of the resin layer by the refractive index (n) of the polymer, i.e., n x d, is one-fourth of the wavelength of visible light, which can transmit through the dielectric reflective layer, that is, a quarter-wavelength layer, the resin layer functions as an anti-reflection layer to visible light. This construction makes it possible to reduce an optical path difference between lights, particularly visible lights reflecting at the upper surface and lower surface of the resin layer to half, thereby effectively minimizing the reflected light. That is, the reflection of light of the wavelength in the visible region can be reduced in comparison with the case where the quarter-wavelength resin layer does not exist. Such an anti-reflection operation can effectively prevent deterioration of the visibility of a display. It is particularly preferred that the above quarter-wavelength resin layer is located on the outermost layer or the light filter so that it is as both an anti-reflection layer and a stain-proofing layer.

As described above, the optical filter of the present invention utilizes a specific dielectric reflective layer as a filter layer. This dielectric reflective layer comprises a first set of dielectric reflective layer units, a plurality of layers each formed of a first polymer and a second set of dielectric reflective layer units constituted by a plurality of layers each formed of a second polymer having a refractive index different from the first polymer and is formed by alternately stacking the first and second polymer layers. In a preferred mode, at least one of the first and second sets of dielectric reflective layer units includes a quarter-wavelength layer with the product of the thickness (d in nm) by the refractive index (n) of the polymer, i.e., n x d, being one-fourth the wavelength of light to he reflected. Thus, the optical filter of the present invention utilizes the so-called the principle of dielectric reflection. The dielectric reflective layer is formed by stacking a plurality of polymers as described above by a predetermined method as described in detail below. There is no need for adding a photosensitizing agent to the polymer layer, which is necessary in the production of the hologram mirror type optical filter, so there is no fear of the photosensitizing agent absorbing light in the visible region which diminishes the visible light transmittance. The dielectric reflective layer comprised substantially of polymers enhances the transparency of the dielectric reflective layer to visible light. For some applications, it is desirable that the dielectric reflective layer has a transmittance of not less than 60% in the three primary color regions, that is, in a blue region (wavelength; 430-490 nm), a green region (wavelength: 515-575 =), and a red region (wavelength; 580-640 nm). A visible light transmittance of less than 60% results in lowered brightness and chroma of light (color) perceived through the filter, deteriorating the displayed image quality. For this reason, the transmittance of light in three primary color regions is preferably greater than 70%, particularly preferably greater than 80%.

The optical filter of the present invention is usually designed so that the light transmittance in the three primary color regions of the light is equivalent to that in the visible light regions other than the three primary color regions. To enhance the cotor purity of the emitted light, however, the light transmittance in the visible regions other than the three primary color regions may be less than 70%. In the present specification, the "light transmittance" or "light reflectance" is a value measured with a spectrophotometer. In the following description, when reference is made to the "light transmittance" without specifying the wavelength region, the "light transmittance" means the transmittance "in the three primary color regions of the visible light."

In a preferred design, the dielectric reflective layer used in the optical filter of the present invention is designed to reflect greater than 70% of the light in a wavelength spectrum of from 800 to 1,000 nm device (hereinafter often referred to as "IR light"), so that in a quarter-wave design the product of (n x d) is in the range of from 200 to 250 nm. This construction can effectively cut off light in a wavelength spectrum of from 800 to 1,000 nm emitted from the image plane of the emission device and effectively prevent interference of remote controlled audiovisual devices. The filter of the present invention, the dielectric reflective layer contained therein as the filter layer, and other particulars will he described in more detail.

For some applications, such as a filter for plasma display devices, the optical filter of the present invention may be formed, for example, by intimately applying a dielectric reflective layer, made of a dielectric reflective film (described in detail below) onto a transparent support. The transparent support may be formed of, for example, glass or a plastic material. Plastic material usable herein include acrylic, polycarbonate, and epoxy resins. Among them, the acrylic resin is preferred as the plastic material because it has excellent transparency and mechanical strength (particularly surface hardness). An acrylic resin which has been blended with a polyvinylidene fluoride resin in order to improve the impact resistance may also he used. The thickness of the support is usually 1 to 10 mm, preferably 2 to 7 mm, most preferably 3 to 5 mm. When the support thickness is excessively large, the transparency (light transmittance) of the whole optical filter is likely to be lowered, while an excessively small thickness is likely to make it difficult to intimately apply the dielectric reflective film to the support. When the mechanical strength of the dielectric reflective film per se is unsatisfactory, provision of the optical filter on the image plane often causes the whole filter to be bent and deformed. The light transmittance of the support is usually not less than 70%, preferably not less than 80%, particularly preferably not less than 85%.

The intimate application of the dielectric reflective film to the support may be performed, for example, with the aid of an adhesive having high transparency. The light transmittance of the adhesive used herein is usually not less than 70%, preferably not less than 80%, particularly preferably not less than 85%. An acrylic adhesive having a combination of high transparency with high bonding strength is preferred as the adhesive. An acrylic adhesive, for example, may be prepared from a reactant containing an acrylate monomer having an alkyl group containing 4 to 14 carbon atoms, such as isooctyl acrylate, butyl acrylate, or 2-ethylhexyl acrylate, and a (meth)acrylate monomer having a polar group, such as (meth)acrylic acid, carboxyalkyl (meth)acrylate, hydroxyalkyl (meth)acrylate, or N,N-dialkylacrylamide, or a composition containing such a polymer. As well known in the art, the "(meth)acrylic acid" embraces acrylic acid and methacrylic acid, and this applies to (meth)acrylate and the like. In intimately applying the dielectric reflective film to the support with the aid of the acrylic adhesive, for example, the acrylic adhesive may be formed as an adhesive layer on the surface of the dielectric reflective film followed by application of the support onto the dielectric reflective film. The thickness of the adhesive layer is usually 5 to 100 $\mu$m, preferably 10 to 50$\mu$m. The adhesive layer may be provided, for example, by coating a liquid containing the above polymer or polymer composition onto the dielectric reflective film. Alternatively, the coating liquid containing the above reactant may be coated followed by polymerization on the film. Further, it is also possible to use a method wherein a film adhesive provided on a release film is transferred from the release film onto the dielectric reflective film. The adhesive layer may contain diffusible reflective particles such as polystyrene particles and the like, as long as they do not adversely affect the transparency of the layer.

Preferably the dielectric reflective layer is sandwiched between two sheets of the above support so that the dielectric reflective layer is not exposed to an external environment, thereby protecting the dielectric reflective layer against deterioration and damage. The light transmittance of the whole optical filter is usually not less than 65%, preferably not less than 70%, particularly preferably not less than 75%. The thickness of the whole optical filler including additional layers described below is usually in the range of from 2 to 15 mm. When used on a display device, for example, the optical filter may he disposed on the front surface side of an image plane of the display device by the following method. The optical filter is formed into a plate having substantially the same shape as the image plane and at at least slightly larger than the image plane. A frame with a groove for receiving the edge portion of the whole periphery of the plate is proposed, and the optical filter is attached to the frame. The frame section of the optical filter with a frame is joined to the edge portion (on which a display frame for supporting the display body is usually disposed) to fix the optical filter. Alternatively, joining means, such as an adhesive or a hook-and-loop fastener, may be used to join the peripheral portion of the image plane of the display to the peripheral portion of the optical filter, thereby fixing the optical filter. Further, a transparent adhesive layer is disposed on substantially the whole surface of the face opposed to the image plane of the display of the optical filter to adhere the whole image plane to the above opposed face of the optical filter, thereby fixing the optical filter to the image plane of the display. Furthermore, the optical filter of the present invention may comprise a dielectric reflective layer and an adhesive layer. The dielectric reflective film included in the dielectric reflective layer may comprise a stack of two or more films for improving the reflecting wavelength property and the reflectance to desired values. In this case, it is common practice to simply stack films without use of any adhesive and to fix the films with a frame in the same manner as described above. Alternatively, the films may be stacked on top of each other or one another with the aid of the above transparent adhesive. The number of films stacked is preferably three to ten. When the number of films stacked is smaller than three, the effect of improving the reflecting wavelength property and the reflectance to desired values cannot he expected, while when the number of films stacked exceeds ten, the visible light transmittance is likely to lower.

For some applications, the optical filter of the present invention may take various forms further comprising one or more additional layers. For example, according to a preferred embodiment of the present invention, an EMI shielding layer having a light transmittance of not less than 80% may he further intimately applied onto at least one surface of the dielectric reflective layer. This embodiment may be used to filter out electromagnetic radiation that is regarded as harmful to the human body. Such EMI shielding layers usable herein include ITO films, thin films of metals, and metallic meshes. The thickness of the shielding layer, although it varies depending upon the light transmittance of the dielectric reflective layer or the shielding layer, is set so that the light transmittance of the optical filter is not lower than the above level. For example, in the case of the ITO film, the transparency is relatively high, and, hence, the thickness of the ITO film is preferably in the range of from 50 nm to 3 $\mu$m. According to another preferred embodiment of the present invention, a transparent resin layer having a light transmittance of not less than 80% may be intimately applied onto at least one surface of the dielectric reflective layer. This resin layer may take forms of a hard coat layer, an antistatic layer, a ultraviolet light (UV) cutoff layer and the like and may be formed of a resin or a resin composition suitable for the purpose. For example, when the resin layer is a UV filter layer which functions to reflect or absorb light in a wavelength spectrum of from about 280 to about 400 nm (ultraviolet region), harmful ultraviolet light emitted from the image plane of the display device, together with the IR light, can he advantageously cut off. Although the light transmittance of the UV-cut layer is not particularly limited so far as the transparency of the optical filter is not deteriorated, it is preferably not less than 80%.

Preferably, the above UV-cut layer may be a resin coating comprising an acrylic resin, a polyester resin, an epoxy resin or the like. For example, a coating liquid containing a polymerizable component, such as a (meth)acrylate monomer, may he coated onto the surface of the dielectric reflective layer followed by polymerization of the polymerizable component to form a resin layer. A preferred (meth)acrylate monomer is a monomer having in its molecule a phenyl group and a (meth) acryloyl group, such as benzyl acrylate, phenoxyethyl acrylate, or bisphenol A acrylate. These materials enhance the heat resistance, abrasion resistance, and transparency of the resin layer after the polymerization. An oligomer of a component containing the above monomer and urethane (meth)acrylate may be used instead of the (meth)acrylic monomer. In addition to the (meth) acrylate monomer, compounds having an epoxy or vinyl ether group and siloxane-modified polyesters may be used either alone or a mixture thereof with the (meth) acrylate monomer. The above polymerizable component may contain additives, such as an inorganic colloid, a coupling agent, an antistatic agent, an ultraviolet absorber, a crosslinking agent, an antioxidant, an antimold, a photocatalyst and the like so far as these additives are not detrimental to the effect of the present invention. The polymerization may be performed by radiation irradiation or heating.

The UV-cut layer may also be formed by intimately applying a resin film onto the surface of the dielectric reflective layer. Resin films usable herein include, beside acrylic resin films, polyester films (such as polyethylene terephthalate and polyethylene naphthalate films), and polyvinylidene fluoride films (including acryl-modified vinylidene fluoride films). Use of, for example, the acrylic adhesive as described above, is preferred for intimately applying the resin film onto the dielectric reflective layer. The transparent resin layer, even when it has any of the above effects than the UV-cutting effect, can be formed using the same material and method as those used in the formation of the UV-cut layer. The thickness of the transparent resin layer may be set so that the optical transmittance of the optical layer is not less than the above level. For example, in the case of a layer comprising an acrylic resin, the transparency is relatively high, and, hence, the thickness of the acrylic resin film is preferably in the range of from 0.1 to 10 $\mu$m.

The transparent resin layer and the EMI shielding layer, for example, may be intimately applied directly on respective surfaces of the dielectric reflective layer. Specifically, the optical filter may comprise a laminate of a UV-cut layer, a dielectric reflective layer, and a shielding layer provided in that order. Alternatively, one of the transparent resin layer and the EMI shielding layer may be intimately applied onto the dielectric reflective layer followed by disposition of the other layer thereon.

When the optical filter comprises two transparent supports, the optical filter may be formed, for example, by the following method. At the outset, a dielectric reflective film is intimately applied onto a first support through an acrylic, pressure-sensitive adhesive, and an EMI shielding layer is then disposed on the dielectric reflective layer. The EMI shielding layer may he coated on the surface of the dielectric reflective film. Coating methods usable herein include, for example, thin film forming methods, such as vapor deposition and sputtering, and a method wherein a conductive paste is coated. Alternatively, a laminate film of a transparent plastic film and an EMI shielding layer may be intimately applied onto the dielectric reflective film through an acrylic, pressure-sensitive adhesive. Preferred materials for the plastic film include polyethylene terephthalate, acrylic polymer, and polyvinylidene fluoride. The EMI shielding layer may be coated on the surface of the plastic film. Next, a second support is disposed on the laminate of the first support/dielectric reflective film/EMI shielding layer, and a transparent resin layer, such as a UV-cut layer, is then disposed on the second support to complete the optical filter. The second support may be or may not be intimately applied to the laminate. When intimate application is contemplated, use of an acrylic adhesive is preferred. The transparent resin layer may be formed by using the method similar to that described above (that is, by a method wherein the transparent resin layer is provided directly on the dielectric reflective layer). Alternatively, other layer(s), for example, an antireflection layer described in detail below, may be disposed on the transparent resin layer.

For some applications, it is preferred that an anti-reflection layer be disposed directly or through the transparent resin layer on the dielectric reflective layer of the optical filter of the present invention. The dielectric reflective layer and transparent resin layer have high surface property (surface roughness) and comparatively high surface reflectance, resulting in poor visibility of the image plane of the display. The antireflection layer can effectively prevent such undesired surface reflections. When the dielectric reflective layer is sandwiched between two transparent supports, the anti-reflection layer may be disposed on the surface of the support of the side which does not face the image plane or the display. As the anti-reflection layer, for example, a film whose surface is matte finished can be used. It is preferred that a stain-proofing layer is disposed directly or through the transparent resin layer on the dielectric reflective layer to effectively prevent scratching the surface of the filter, or to prevent a stain such as a fingerprint from adhering to the surface of the filter to make the image plane unclear. In a preferred embodiment, the stain-proofing layer may be formed of a fluorine coating agent (for example, those available under the trade designation Fluorad from Minnesota Mining and Manufacturing Company (3M Co.) of St. Paul, Minnesota, U.S.A., or formed of the resin layer containing a fluorine polymer as a transparent resin as described above. Alternately, the anti-reflection layer may be coextruded with the dielectric layer as described in U.S. Patent Application 09/006,379.

The fluorine polymer for formation of the stain-proofing layer may include THV (tetrafluoroethylene-hexafluoropropylene-vinylidene fluoride), polyvinylidene fluoride, TFE-PDD (tetrafluoroethylene-perfluoro cyclic polymer) or the like. Furthermore, the fluorine polymer may be used in combination with a non-fluorine polymer such as acrylic polymer or the like so far as the effect of the present invention is not adversely affected. A preferable fluorine polymer is a crystalline polymer such as THV or the like. An amorphous fluorine polymer such as TFE-PDD or the like has comparatively low heat resistance at high temperature, and additional processes such as crosslinking and materials (crosslinking agent) are required to enhance the heat resistance. The crystalline fluorine polymer can easily enhance the heat resistance of the resin layer without requiring additional processes such as crosslinking and materials (crosslinking agent). A preferable stain-proofing layer is a quarter-wavelength resin layer containing a fluorine polymer. It is a resin layer disposed to face at least one surface of the above dielectric reflective layer, the thickness and refractive index of which satisfy the predetermined relationship described above. As the wavelength of visible light determining the product (n x d) of the quarter-wavelength resin layer, a value contained within the region usually from 430 to 640 nm (region containing the whole region of the three primary color regions), preferably from 515 to 575 nm (region containing a green region, which is substantially the central region of the tree primary color regions) is selected. This construction can effectively enhance the stain-proofing operation to light of substantially whole region in visible region. For example, the wavelength of 550 nm is selected and the refractive index of the resin and the thickness of the layer are determined so that the product (n x d) becomes 137.5. For example, when THV having a refractive index of 1.36 is used, a THV layer having a thickness of about 101 nm is provided on the reflective surface of the dielectric reflective layer. The stain-proofing layer of the quarter-wavelength resin layer effectively reduce the surface reflection of light in the visible light regions, which causes deterioration of the visibility of the display.

The above quarter-wavelength resin layer (resin layer containing a fluorine polymer) may be deposited to face at least one surface of the dielectric reflective layer, for example, in the rollowillg manner:

The quarter-wavelength resin layer is intimately applied

(1) directly on the dielectric reflective layer, or
(2) after the above transparent resin layer and EMI shielding layer are provided.

The intimately applied layer can be formed by applying a resin coating material containing a fluorine polymer. Further, in both cases of the above techniques I and 2, a primer layer is preferably used to enhance the adhesion of the quarter-wavelength resin layer. Particularly, when the quarter-wavelength resin layer is disposed on the outermost layer of the optical filter, the wear resistance (scratch resistance) of the quarter-wavelength resin layer can be effectively enhanced. As the primer layer, for example, a coated film containing a coupling agent such as silane coupling agent or the like may be used. The thickness of the primer layer is usually from 0.01 to 1 μm.

The above quarter-wavelength resin layer can be formed, for example, in the following manner. First, a fluorine polymer such as THV or the like is dissolved in a polar solvent such as MEK (methylethylketone) or the like to prepare a resin coating material. The concentration of the fluorine polymer in the resin coating material is usually from 0.5 to 10% by weight. Then, the resin coating material is applied on the dielectric reflective layer or transparent resin layer by using a coating means such as bar coat, knife coat, role coat, dye coat, spin coat or the like, followed by drying to form a quarter-wavelength resin layer containing a coated film containing a fluorine polymer. The concentration of the coating solution and coating conditions are appropriately determined so that the thickness of this dry coated film is within the above pre-determined range.

As described above, since a normal dielectric reflective layer is formed by laminating a plurality of layers of two polymers having a different refractive index, control of the film thickness is difficult. Therefore, because of the variation in the film thickness, light in the visible light region, which is not designed to be reflected, may be slightly reflected. The reflectance in the visible light region sometimes reaches about 10%. The optical filter with a stain-proofing layer, however, can effectively prevent deterioration of the visibility of the display.

When the transparent resin layer and EMI shielding layer are provided and the quarter-wavelength resin layer is intimately applied on them according to the above technique (2), the refractive index ($n_T$) of the transparent resin layer and EMI shielding layer is usually different from the refractive index ($n_T$) of the quarter-wave resin layer so that the anti-reflective effect is unnecessarily reduced. Preferably, $n_u$ and $n_T$ satisfy the expression: $n_u > n_T$. This construction makes it possible to exert the effect of the transparent resin layer and EMI shielding layer without reducing the anti-reflection effect. Preferably, $n_u$ and $n_T$ satisfy the expression: $0.8 \times (n_T)^2 \leq n_u \leq 1.2 \times (n_T)^2$, and particularly $n_u$ is approximately the same as $(n_T)^2$. The more closer $n_u$ is to $(n_T)^2$, the more the deterioration of the anti-reflection effect can be effectively prevented.

As an organic material, a polymer resin has comparatively low refractive index compared to an inorganic material. Accordingly, when the resin is placed between the quarter-wavelength resin layer and the dielectric reflective layer, to increase the refractive index of the transparent resin layer adhered to the both layers, a compound such as:

(I) a polymer containing at least one of a benzene ring, a halogen atom other than a fluorine atom and a sulfur atom in the molecule, and (II) incorporation of an oxide colloid having high refractive index, such as titanium oxide, antimony pentoxide, zirconium oxide, niobium oxide, aluminum oxide or the like may be used. In the case of (II), the transparent resin layer also functions as a hard coat layer, making it possible to effectively enhance the wear resistance (scratch resistance) of the quarter-wavelength resin.

Since the above oxide colloid has a particle diameter smaller than the wavelength of visible light, the transparency of the resin layer does not deteriorate, even if a comparatively large amount of the oxide colloid is used. The particle diameter is preferably 1 to 300 nm as measured by an electron microscope. When the particle diameter is less than 1 nm, the wear resistance is not enhanced; when the particle diameter is greater than 300 nm, the dispersibility of the colloid and the transparency of the transparent resin layer are likely to be lowered. The content of the oxide colloid is usually from 50 to 1000 part by weight based on 100 parts by weight of the whole resin. A coupling agent such as a silane coupling agent or the like may also be added to uniformly disperse the oxide colloid. The thickness of the transparent resin layer used in combination with the quarter-wavelength resin layer is usually within the range from 1 to 40 $\mu$m. A colloidal silica may be contained in the transparent resin layer, to effectively enhance the wear resistance of the quarter-wavelength resin layer.

The above optical filter with an anti-reflection layer is formed by fixing a laminate comprising the antireflection layer and dielectric reflective layer through a transparent adhesive on a transparent support made of acrylic resin, glass or the like. In this case,

(i) the anti-reflection layer may be in contact with the adhesive, or (ii) the dielectric reflective layer may be in contact with the adhesive. However, it may also be used in such a manner that visible light, which is preferably not reflected, that is, which would preferably he transmitted, is used so that visible light enters into the dielectric reflective layer after transmission through the antireflection layer. For example, a filter for display is preferably used in such a manner that the dielectric reflective layer is disposed between the display image plane and the anti-reflection layer.

When the anti-reflection layer is also utilized as the stain-proofing layer, the anti-reflection layer is preferably disposed on outermost layer in the form of the above item (ii). Furthermore, the resin layer containing a fluorine polymer is provided on the surface of the side which is not bonded to the laminate comprising the antireflection layer and dielectric refractive layer of the transparent support, thereby making it possible to impart the stain-proofing effect on this surface and to further improve the transmittance of visible liglit. Furthermore, a laminate comprising an anti-reflection layer and a dielectric refractive layer, which contains no support, can also be used as the optical filter with antireflection layer.

The optical filter with an anti-reflection layer has other applications than as a filter for a display. For example, it is useful as an energy saving film, which is used by applying to a window glass of a wheeled vehicle (car, train or the like), a shipping, an aircraft, a chamber (room) of buildings or the like. In these applications, the surface reflection of visible light in the window glass is inhibited (that is, the transmittance of visible light is effectively enhanced), thereby making it possible to effectively reflect light, such as light in the infrared region containing thermal rays, ultraviolet rays, electromagnetic radiation harmful to the human body without deteriorating visibility out of the window glass. The energy saving film is usually applied to the interior side of a window glass in such a manner that the anti-reflection layer faces the interior side. As the application (adhesive) means onto the window glass, the above transparent (light transmission) adhesive can be utilized. In this case, the above light filter containing no transparent support is usually directly adhered to the window glass.

The structure obtained by adhering the above optical filter with an anti-reflection layer to the window glass provides another embodiment of the present invention. That is, it is a window glass structural material comprising (1) a window glass and (2) an optical filter with an anti-reflection layer of the present invention; which is adhered to at least one surface of the window glass. Such a window glass structural material can prevent a rise in interior temperature due to light in the infrared region containing thermal rayS and effectively enhance interior cooling efficiency without deteriorating the visibility out of the window glass.

When using as a filter for display, a conductive material, such as a metallic foil, may be further disposed on the surface of the optical filter in its site which is not an obstacle to viewing of an image on the image plane through the filter, such as the edge portion of the optical filter, or a position of the interior of a filter having a,laminate structure, thereby providing an earthing or grounding site. Suitable metallic foils include a copper foil tape.

The optical filter of the present invention may further include dielectric reflective layers that arc colored in order to use the optical filter as a reflection color filter. For example, as described above, it is possible to use a method wherein the dielectric reflective layer capable of reflecting IR light is constructed so that visible light in a predetermined wavelength region is reflected while transmitting visible light in desired wavelength regions other than the above cut-off wavelength region, thereby permitting desired visible light alone to be applied to an illuminating object while preventing the application of light containing a relatively large amount of heat rays or the like. Preferably, the above dielectric reflection principle is utilized for reflecting visible light in the predetermined wavelength region. Specifically, the dielectric reflective layer may be constructed so that at least one of the first and second sets of dielectric reflective layer units includes a quarter-wavelength layer with the product of the thickness (d) by the refractive index (n) of the polymer, i.e., n x d, being one-fourth the wavelength of the IR light and the predetermined visible light.

The optical filter of the present invention is particularly suitably disposed on the front surface side of an image display plane of a plasma display device. The plasma display device may be, for example, a plane light emitting device which utilizes light emission created by plasma discharge of a noble gas (such as neon or xenon) and is called a "plasma display device (PDP)". The drive system may be either an ac drive system or a de drive system. The size of the image plane is usually 20 to 60 in., and the angle of visibility is usually not less than 140°. The dichroic filters described herein are especially useful in combination with such a display because: (1) the size of the image plane of the plasma display device is relatively large and a conventional optical filter cannot exhibit satisfactory optical filter effects in the whole image plane; (2) light in undesired wavelength regions (such as short-wavelength electromagnetic radiation, ultraviolet light, and IR light) is emitted at relatively high intensity and the emission of IR light, in particular, is likely to cause malfunction of a remocon; and (3) the above undesired light is emitted from the relatively large image plane over a wide area around the display device, leading to a fear of all the apparatuses, other than the display device, disposed around the display device being influenced by the undesired light. The optical filter of the present invention, even when disposed on the front surface side of a relatively large display image plane, can satisfactory exhibit the optical filter effect in the whole image plane, making it possible to effectively prevent the adverse effect (wrong working of a remocon or the like) on all the apparatuses, other than the display device, disposed around the display device. Further, the optical filter of the present invention has transparency high enough not to unnecessarily absorb the visible light necessary for a viewer to see an image on the image plane and hence permits the viewer to see a high-quality image without sacrificing the image quality.

Accordingly, one aspect of the present invention provides a display device which comprises a plasma display device and an optical filter disposed on the front surface side of a display image plane of the plasma display device which can effectively prevent unwanted emissions that adversely effect the operation of other apparatuses, without sacrificing the image quality of the display device. As described above, use of the optical filter of the present invention exerts such an effect that the transparency to visible light is high and light in the undesired wavelength regions can be effectively cut off. Particularly, the optical filter of the present invention is noteworthy in that deterioration in image quality caused by deterioration in transparency due to absorption of visible light, which has been an unsolved problem in the prior art, can be prevented, and light in IR wavelength region which causes wrong working of a remocon for A/V devices can be effectively cut off. Furthermore, by including a stain-proofing layer such as a fluorine polymer-containing layer on the optical filter of the present invention, one can minimize scratching of the filter surface or adherence of stains or fingerprints to the surface of the filter. Furthermore, when a quarter-wavelength resin layer is provided, reflection of light of the wavelength in the visible region can be lowered, thereby effectively preventing deterioration of the visibility of the display.

IR sensor filter

In addition to emission sources such as plasma display devices and compact fluorescent bulbs which emit undesirable IR radiation that can interfere with remote controlled A/V systems, recent technologies have been introduced that also may interfere with the remote control on an A/V system. These include devices that use a high frequency data stream such as computer peripherals, including data relays, keyboards, digital camera/printer linkages, and local area networks. The infrared emissions of these devices are typically high frequency, and can be demodulated hy the low speed detector on the A/V system, creating apparently random commands. In this case, filtering the emission source is not practical, since operation of the high frequency device requires emission of signals in the wavelength region of interest. Instead, it is desirable to filter the input signal to the infrared detector on the A/V device so that unwanted high frequency emissions do not interfere with the low frequency emissions from the remote control device.

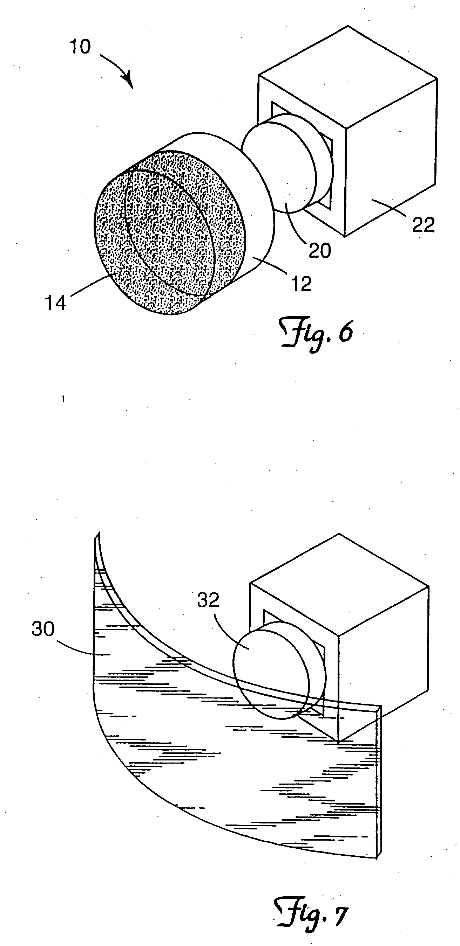

The polymeric dichroic filter of the present invention has a rapid transition from reflection to transmission, is inexpensive, and can be readily adapted to meet specific applications. Figure 6 shows the application of the filter 10 to reject both short and long interference wavelengths by use of a notch filter 12 and a diffuser 14. The diffuser 14 provides a wide viewing angle for received signals. Decreasing the ratio of the width of the diffuser/filter assembly to the distance from the detector element 20 on the electronic device 22 will increase the effective spectral discrimination ratio between the transmitted and reflected wavelengths, In application, this ratio should be balanced with detector sensitivity, It is preferred that the optical aperture of the diffuser/filter assembly be approximately equal to the detector aperture. The IR filter in Figure 6 may he any dichroic filter, however it is preferably a filter made from a multilayer birefringent polymer. It is also preferred that the filter is designed to have a sharp transition from high transmission to high reflectivity as described in U.S. Patent Application 09/006,085.

A second design is shown in Figure 7, in which the IR filter 30 is curved to provide a wide viewing angle in one plane, and a limited viewing angle in the orthogonal plane. The IR film is curved such that the film follows the arc of a cylinder, and the detector surface 32 is at the center of the arc. Optical discrimination is increased in this construction by increasing the radius of the arc relative to the aperture of the detector. The viewing angle can be further increased in both planes by forming the film to follow a spherical shape. This compound spherical shape can be manufactured by thermoforming the film as described in U.S. Patent Application 09/126,917. Thermoforming will cause spectral shifts due to localized thinning of the film, and the shape of the film may be modified from a sphere to accommodate the spectral shift.

The present invention will be described in more detail with reference to the following examples. It should be understood that the present invention is not limited to the following example.

Example 1.

The optical filter of the present invention was prepared as follows:

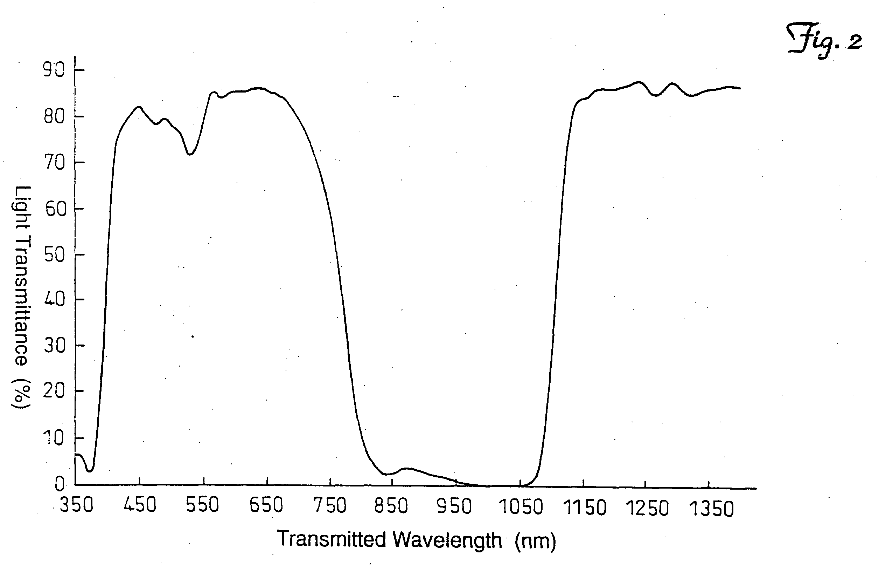

At the outset, a transparent acrylic resin sheet having a size of a 2 mm in thickness, 36 cm in dimension in plane longitudinal direction, and 47 cm in transverse direction (manufactured by Mitsubishi Rayon Co., Ltd., light transmittance = about 100%) was provided as a support. A 55 μm-thick dielectric reflective film (the plane dimension being the same as that of the support) was intimately applied onto the transparent support through an adhesive layer formed of an acrylic pressuresensitive adhesive (an isooctyl acrylate/acrylic acid copolymer, light transmittance = about 98%). In the preparation of the optical filter in this way, the adhesive layer was formed by coating a solution containing the above pressuresensitive adhesive onto one surface of a dielectric reflective film by means of a knife coater to a thickness of 25 μm. The dielectric reflective film was prepared, using polyethylene naphthalate (PEN) (refractive index = 1.64) as a first polymer and polymethyl methacrylate (PMMA) (refractive index = 1.49) as a second polymer, by a method disclosed in International Patent Publication WO 95/17303. The dielectric reflective film thus prepared had a transmission spectrum as shown in Fig. 2. The spectrum shown in the drawing is for the results of measurement on light which has entered along a normal to the surface of the dielectric reflective film. In this dielectric reflective film, light which could not be transmitted is substantially entirely reflected, and the light transmittance in an IR region (a wavelength spectrum of from 800 to 1,000 nm) was low with the light reflectance in its region being not less than 80%. The light transmittance and the light reflectance were measured with an autographic spectrophotometer "Model U-4000" manufactured by Hitachi, Ltd.

The optical filter prepared above was evaluated for the effect of cutting off IR light according to the following procedure:

At the outset, a 21-in, plasma display (PDP) "Model PDS-2170" manufactured by Fujitsu, Ltd. and a video deck "Model HR-S7800" manufactured by Victor Co. of Japan, Ltd. (JVC) (normally equipped with a remocon) were provided. The video deck was disposed at a position about 0.5 m distant from the center in the horizontal direction of the display image plane along a direction normal to the image plane in such a manner that a section for receiving signals from the remocon of the deck (a light receiving section) is substantially vertical to the normal to the image plane. In this case, the angle of disposition of the deck 0 was 0°. A static image was then allowed-to appear on the display image plane of PDP and viewed through the optical filter prepared above. As a result, for all of four color images, that is, all the cases where four colors (luminescent colors) of red, green, blue, and white were separately allowed to appear on the image plane, the image plane showed a bright color.

On the other hand, the remocon of the video deck was disposed at substantially the center in the horizontal direction of the display image plane above the housing of PDP, and a remocon signal was transmitted toward the signal receiving section of the deck while taking care for the remocon not to cover the image plane, thus performing remote controlling. For the above four color images of red, green, blue, and white, five type of remote controlling, that is, (i) on-off, (ii) reproduction, (iii) fast-forwarding, (iv) rewinding, and (v) temporary stopping, were performed. As a result, for all the color image planes, all the types of remote controlling could be performed without any wrong working.

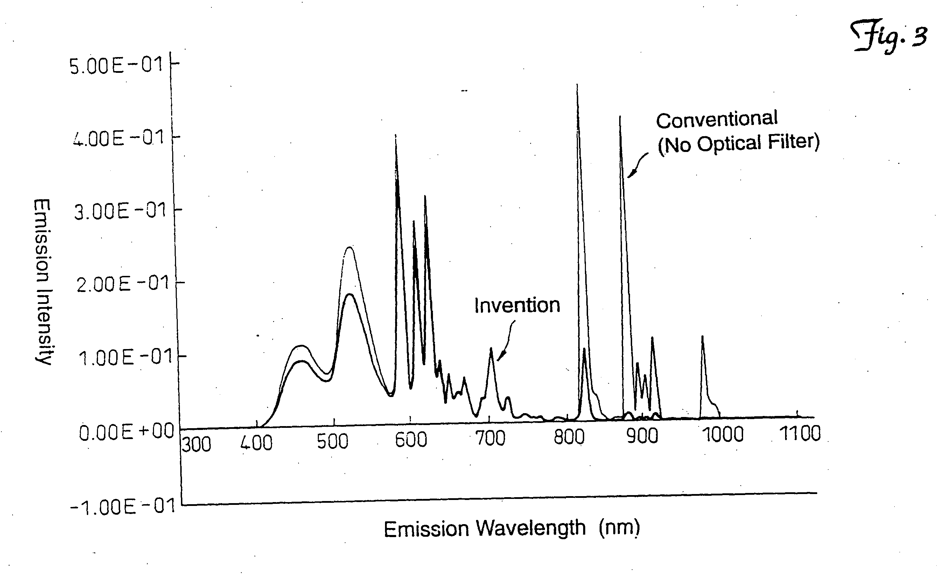

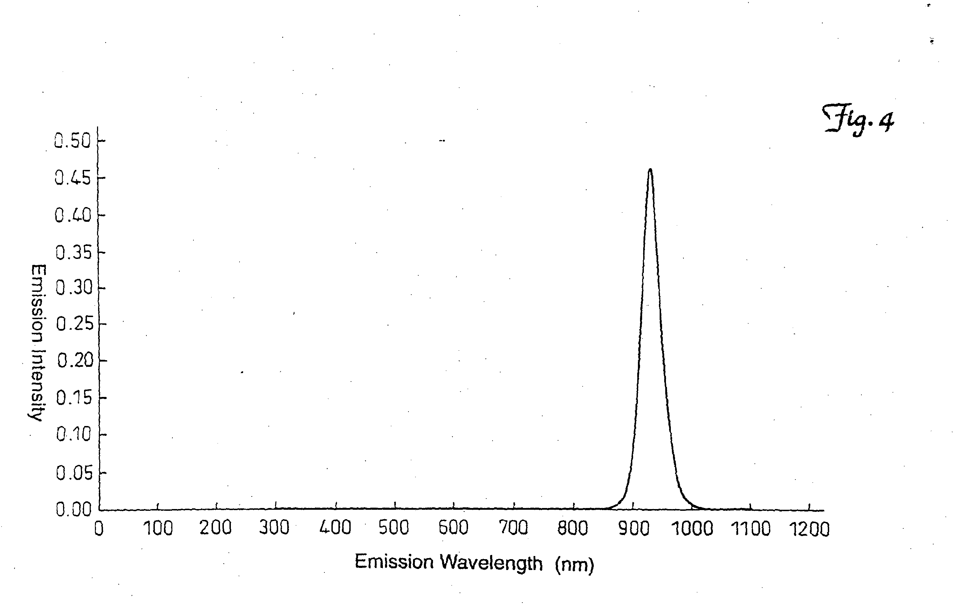

For comparison, remote controlling of the deck was performed in the same manner described above, except that the optical filter of the present example was not provided on the front surface side of the display image plane of PDP. As a result, for all the color image planes, none of the above types of remote controlling could be successfully performed. These results can be more easily understood from an emission spectrum for the PDP image plane shown in Fig. 3 and an emission spectrum for a remocon signal shown in Fig. 4.

As can be seen from Fig. 4, the remocon transmits IR light in a wavelength spectrum of from about 850 to 1,000 nm. The thin line graph of a comparative example in Fig. 3 shows that the image plane of PDP emits IR light in a wavelength spectrum of from about 850 to 1,000 nm. The thick line graph, on the other hand, shows an example of the present invention in which the optical filter is disposed on the front surface of the image plane of PDP and effectively cuts off such IR light. When the signal receiving section of the video deck receives both the remocon signal and the IR light which is emitted from the image plane of PDP and which has substantially the same wavelength spectrum and intensity as the optical signal of the remocon, the deck is not actuated. When the optical filter disposed on the front surface of the image plane effectively cuts off the IR light emitted from the image plane of PDP, the above wrong working can be effectively prevented.

A test on the effect of cutting off IR light was performed in the same manner as described above, except that the angle of disposition, 0, was varied. When the angle of disposition, 0, was in the range of from 0 to 45°, the wrong working of the remocon for the deck always occurred, and a θ of about 60° resulted in somewhat reduced wrong working of the remocon. By contrast, it was found that provision of the optical filter of this example on the front surface of the image plane would prevent such wrong working in a 0 in the range of from 0 to 60°.

Example 2

An optical filter of this example was prepared in the same manner as in Example I. except that a quarter-wavelength resin layer having 101 nm in thickness was prepared by dissolving a THV polymer "Model THV200" manufactured by Daineone Co., Ltd. in MEK so that the concenttation was 3.4% by weight, applying the resulting solution (resin coating material) on the surface (surface of the side which is not bonded to a transparent support) of a dielectric reflective film (dielectric reflective layer) using a wire bar (diameter; 0.4 mm), followed by drying. The refractive index of the above THV polymer was 1.36.

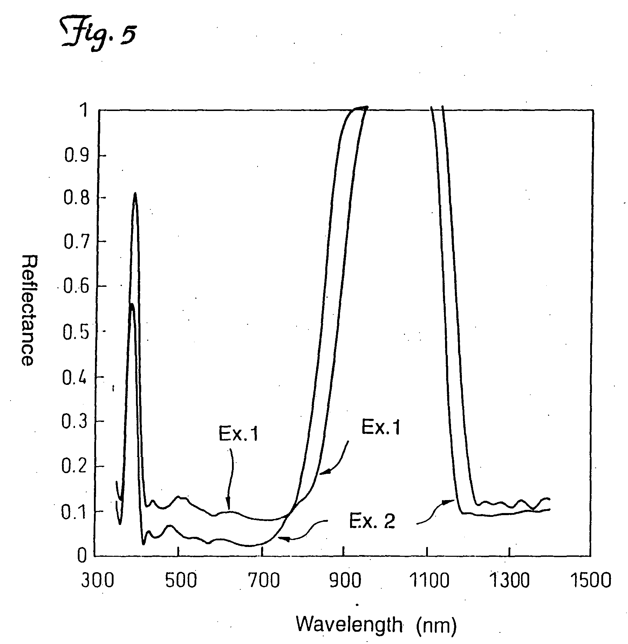

The reflectance of the optical filter of this example was measured by using the same spectrophotometer as that used in Example 1. The results are shown in Fig. 5. Light was allowed to enter from the side of the quarter-wavelength resin layer into the dielectric reflective layer. Furthermore, the measured results of the optical filter (provided with no quarter-wavelength resin layer) of Example 1 is also shown in the same figure for reference. As is apparent from the results plotted in Fig. 5, the effect of the quarter-wavelength resin layer as the anti-reflection layer makes it possible to reduce the reflectance in the visible region (from about 430 nm to 640 nm) without deteriorating any performance of IR light cutting.

Example 3

An optical filter of this example was prepared in the same manner as in Example 2, except that a primer layer was provided on the surface (surface of the side which is not bonded to a transparent support) of the dielectric reflective film (dielectric reflective layer) and a quarter-wavelength layer was formed on the primer layer. The primer layer was a coated film having a thickness of about 30 nm, obtained by applying a silane coupling agent (ethanol solution having a concentration of 1% by weight) using a wire bar, followed by drying.

The optical filter of this example had the same filter performance (IR light cutting and anti-reflection) as that of Example 2. Furthermore, the trace of a fingerprint of fingers purposely disposed on the surface of the quarter-wavelength resin layer for the purpose of evaluating the stain-proofing property could be cleanly wiped out only by rubbing with a commercially available tissue paper several times without scratching the surface of the quarter-wavelength resin layer.

**Claims**

1. An optical filter, comprising:

   a dielectric reflective layer capable of reflecting at least 70% of radiation in an undesired wavelength region while transmitting a predetermined proportion of light in a desired wavelength region, wherein the dielectric reflective layer comprises a set of first polymer layers comprising a first polymer in combination with a set of second polymer layers comprising a second polymer having a refractive index different from the first polymer, wherein the first polymer layers and the second polymer layers are alternately stacked; and
   an EMI shielding layer disposed on the dielectric reflective layer.

2. The optical filter of claim 1, wherein the EMI shielding layer is disposed on at least one surface of the dielectric reflective layer.

3. The optical filter of claim 1, further comprising a substrate upon which the dielectric reflective layer is disposed.

4. The optical filter of claim 3, wherein the substrate comprises glass.

5. The optical filter of claim 3, further comprising a conductive material disposed on a grounding site of the dielectric reflective layer.

6. The optical filter of claim 5, wherein the grounding site is positioned on an edge portion of the optical filter.

7. The optical filter of claim 1, wherein the optical filter further comprises a resin layer disposed on the EMI shielding layer.

8. The optical filter of claim 1, wherein the optical filter further comprises a resin layer disposed on at least one surface of the dielectric reflective layer.

9. The optical filter of claim 8, wherein the resin layer is disposed between the EMI shielding layer and the at least one surface of the dielectric reflective layer.

10. The optical filter of any one of claims 7-9, wherein the resin layer comprises a UV layer.

11. The optical filter of any one of claims 7-9, wherein the resin layer comprises an anti-reflection layer.

12. The optical filter of any one of claims 7-9, wherein the resin layer comprises a scratch resistant layer.

13. The optical filter of any one of claims 7-9, wherein the resin layer comprises an antistatic layer.

14. The optical filter of claim 1, wherein the EMI shielding layer comprises a metallic mesh.

15. An article comprising:

   a source that emits radiation in an undesired wavelength range; and
   the optical filter of any one of claims 1-14.

16. The article of claim 15, wherein the source comprises a plasma display device.

Fig. 1

Fig. 2

Fig. 3

EP 1 566 667 A2

Fig. 4

Fig. 5

*Fig. 6*

*Fig. 7*